# EUROPÄISCHE PATENTSCHRIFT

(11) **EP 2 267 736 B1**
(45) Veröffentlichungstag und Bekanntmachung des Hinweises auf die Patenterteilung: **09.02.2011**
(21) Anmeldenummer: 09008278.5
(22) Anmeldetag: 24.06.2009
(51) Int. Cl.: H01F 7/126, H01F 7/08, F16K 31/06

(54) **Einschraubventil**
Screw-in valve
Soupape à vissage

(43) Veröffentlichungstag der Anmeldung: 29.12.2010
(73) Patentinhaber: HAWE Hydraulik SE, 81673 München (DE)
(72) Erfinder: Neumair, Georg, 85402 Thalhausen (DE); Faber, Bernd, 85356 Freising (DE); Zwingler, Engelbert, 85625 Antholing (DE)
(74) Vertreter: Grünecker, Kinkeldey, Stockmair & Schwanhäusser Anwaltssozietät

(56) Entgegenhaltungen:
- DE-A1-102007 033 060
- JP-A- 55 057 776
- US-A- 5 407 174
- US-A1- 2006 017 031

## Beschreibung

Die Erfindung betrifft ein Einschraubventil der im Oberbegriff des Patentanspruchs 1 angegebenen Art.

Ein Beispiel solcher bekannter Einschraubventile sind Einschraubsitzventile des Typs BVE, deren Spezifikationen in der technischen Informationsschrift D 7921 der Firma HAWE Hydraulik SE, Streitfeldstraße 25, 81673 München, veröffentlicht im März 2008, erläutert werden. Diese bekannten Einschraubventile sind 3/2- und 2/2-Wegesitzventile mit einem zwei Schaltstellungen steuernden Betätigungsmagneten. In der Praxis sind ähnliche Einschraubventile als Sitzventile oder Schieberventile ebenfalls bekannt. Grundsätzlich werden Einschraubventile in eine zum Einschraubgehäuse passende Stufenbohrung eines Blocks, z.B. eines Zylinderblocks oder eines Ventilblocks eingeschraubt, in welchem entsprechende Strömungskanäle zur Stufenbohrung führen. Der Betätigungsmagnet liegt an der Außenseite des Blocks frei.

Bei dem aus der technischen Informationsschrift D 7921 bekannten Einschraubventil ist das Einschraubgehäuse einstückig mit dem Magnetrohr ausgebildet. Der Polkern ist von unten in das den Anker enthaltende Magnetrohr eingeschoben und mit dem Polkern-Flansch von unten an einem obenliegenden Anschlag des Einschraubgehäuses axial positioniert. In das Einschraubgehäuse ist eine obere Hülse abgedichtet eingepresst, die am unteren Ende des Polkerns anliegt und Querdurchgänge sowie einen Ventilsitz aufweist. Auf die obere Hülse ist eine weitere Hülse aufgeschoben, die Querdurchgänge und einen weiteren Ventilsitz enthält. In den Hülsen ist ein längsdurchbohrter Ventilkegel enthalten, der an einer Verdickung zwischen den beiden Ventilsitzen entsprechende Sitzflächen aufweist und entgegengesetzt zur Anzugsrichtung des Ankers durch eine Feder beaufschlagt ist. Der mehrteilige Aufbau ist zur Montage des Ventilkegels erforderlich, dessen Verdickung einen größeren Außendurchmesser als der untere Ventilsitz hat. Bei montiertem Einschraubventil steht das untere Ende der unteren Hülse auf einem Anschlag in der Stufenbohrung des Blocks an, auch um die axiale Positionierung des Polkern-Flansches am Anschlag im Einschraubgehäuse sicherzustellen. Falls zur Anpassung der Magnetkomponenten an ein anderes hydraulisches Ventil mit einem anderen Ventilhub oder anderen relativen Schaltstellungen oder an ein anderes Verhältnis zwischen der Magnetkraftkennlinie und dem Ventilhub das mit dem Magnetrohr einstückige Einschraubgehäuse zu dem anderen Ventiltyp passt, können einfache und kostengünstige spanabhebende Bearbeitungen am Anker und/oder Polkern vorgenommen werden, was beim Hersteller des Einschraubventils mit geringem Aufwand möglich ist. Es kann auch die Oberseite des Polkern-Flansches bearbeitet werden, um den Ankerhub zu verkürzen. Das Magnetrohr kann dann ebenfalls weiter verwendet werden. Falls jedoch das mit dem Magnetrohr einstückige Einschraubgehäuse nicht mehr für den anderen Ventiltyp passt, an den die Magnetkomponenten angepasst werden sollen, z.B. an ein anderes Sitzventil oder ein Schieberventil, lässt sich das Magnetrohr nicht mehr verwenden. Das Magnetrohr ist im Regelfall ein vom Hersteller des Einschraubventils zu beschaffender Kaufteil, beispielsweise von einem Magnethersteller, und um so teurer, desto kleiner die Bauserie ist. Das im bekannten Einschraubventil Typ BVE verwendete Magnetrohr ist kein Standardteil eines Magnetherstellers, sondern wird dort sogar nach Vorgaben des Einschraubventil-Herstellers hergestellt, und in den Gesamtkosten des Einschraubventils ein dominierender Faktor.

Weiterer Stand der Technik ist enthalten in: US 5 407 174 A, US 2006/017031 A, JP 55 057776 A und DE 10 2007 033060 A.

Der Erfindung liegt die Aufgabe zugrunde, ein Einschraubventil der eingangs genannten Art mit einer mechanischen Schnittstelle zwischen den Magnetkomponenten und den Hydraulik-Ventilkomponenten zu schaffen, die es ermöglicht, vorhandene oder kostengünstig beschaffbare Magnetkomponenten modular an unterschiedliche Ventilkonzepte anzupassen.

Die gestellte Aufgabe wird mit den Merkmalen des Patentanspruchs 1 gelöst.

Kern der Erfindung ist ein baulich einfaches mechanisches Schnittstellenkonzept zwischen den Magnetkomponenten und den Hydraulik-Ventilkomponenten eines Einschraubventils. Bei einer Anpassung der Magnetkomponenten an ein anderes Ventilkonzept, beispielsweise mit einem größeren oder kleineren Ventilhub, an einen anderen Ventiltyp mit einer anderen Abstimmung zwischen dem Magnetkraftverlauf und dem Ventilhub, und dgl., kann von den Magnetkomponenten auch das Magnetrohr ohne nachträgliche Modifikationen für die verschiedenen Ventilkonzepte verwendet werden, da es vom Einschraubgehäuse lösbar ist und das neu herzustellende Einschraubgehäuse nur wieder zum Magnetrohr passen muss. Der Polkern und/oder Anker können einfach durch Abdrehen oder Abschleifen zu dem anderen Ventilkonzept passend gemacht werden. Da der Polkern direkt zwischen dem Einschraubgehäuse und dem Magnetrohr axial positioniert ist, wird kein Anschlag in der Stufenbohrung für diese Aufgabe gebraucht, was einen weiteren Freiheitsgrad zur Anpassung der vorhandenen oder kostengünstig zu beschaffenden Magnetkomponenten an unterschiedliche Ventilkonzepte erbringt. Es kann durch Bearbeiten des Ankers und/oder Polkerns der Ankerhub vergrößert oder verkleinert oder relativ zum Einschraubgehäuse versetzt werden. Insgesamt lassen sich so modular und universell die vorhandenen oder kostengünstig in Großserien zu beschaffenden Magnetkomponenten an viele verschiedene Einschraubventile anpassen, und zwar auch für kleinere Einschraubventil-Bauserien. Denn es brauchen nur der Anker und/oder Polkern bearbeitet zu werden, was beispielsweise mit hoher Präzision und effizient in Dreh- oder Schleifautomaten möglich ist. Da das Magnetrohr ein gerades Schraubende aufweist und lösbar mit dem Einschraubgehäuse verbunden ist, kann sogar zwecks einer Anpassung an ein bestimmtes Ventilkonzept das Einschraubende vom Hersteller des Einschraubventils verkürzt werden.

Bei einer zweckmäßigen Ausführungsform weist das Magnetrohr am verschlossenen Ende ein Außengewindes für wenigstens eine Mutter auf, die den auf das Magnetrohr aufgeschobenen Spulenkörper auf das Einschraubgehäuse spannt, vorzugsweise unter Zwischenlage einer Dichtung. Die Mutter ermöglicht den Austausch des Spulenkörpers bei einer Anpassung. Die Dichtung stellt sicher, dass kein gegebenenfalls die Gewindeverbindung zwischen dem Magnetrohr und dem Einschraubgehäuse durchdringendes Druckmittel nach außen gelangt und gegen äußere Einflüsse abgedichtet ist.

Zweckmäßig ist auch der Polkern im Magnetrohr abgedichtet, um sicherzustellen, dass kein Druckmittel von der Ankerseite entlang des Polkerns zu der Gewindeverbindung zwischen dem Einschraubgehäuse und dem Ankerrohr durchdringt.

Die Schraubverbindung zwischen dem Magnetrohr und dem Einschraubgehäuse wird zwischen einem Außengewindeabschnitt am Schraubende des Magnetrohres und einem Innengewindeabschnitt im Schraubsitz des Einschraubgehäuses hergestellt. Zweckmäßig ist der Außengewindeabschnitt länger als der Innengewindeabschnitt, beispielsweise um bei einer Anpassung an ein anderes Ventilkonzept mit kürzerem und/oder versetztem Ventilhub durch Bearbeiten der Oberseite des Polkern-Flansches das Magnetrohr tief genug in den Schraubsitz des Einschraubgehäuses einschrauben zu können.

Zweckmäßig ist ferner zwischen dem Polkern und dem Einschraubgehäuse bzw. im inneren des Schraubsitzes eine Innendichtung vorgesehen, die verhindert, dass Druckmittel aus dem Inneren des nassen Betätigungsmagneten zu der Gewindeverbindung zwischen dem Magnetrohr und dem Einschraubgehäuse vordringt.

Bei einer zweckmäßigen Ausführungsform weist das Einschraubgehäuse im Anschluss an das Einschraub-Außengewinde eingeformte Querdurchgänge und einen eingeformten Ventilsitz für einen Ventilkegel auf. Der Ventilkegel ist mittels eines in der Stößelbohrung des Polkerns angeordneten Stößels über den Anker betätigbar und im Einschraubgehäuse abgedichtet verschiebbar. Das Einschraubgehäuse übernimmt hier auch die Funktion einer Hydraulik-Ventilkomponente, beispielsweise eines Einschraub-Sitzventils. Bei einer Anpassung der Magnetkomponenten an eine andere Schließposition des Ventilkegels an dem Ventilsitz wird beispielsweise der Polkern und/oder der Anker so bearbeitet, dass der Anker in der Schließposition einen vorgeschriebenen Mindestabstand zum Polkern aufrecht hält und/oder mit optimaler Kraft wirkt.

Bei einer anderen, zweckmäßigen Ausführungsform des Einschraubventils, hier eines Wege-Schieberventils, kann im Einschraubgehäuse eine axiale Schieberbohrung für einen abgedichtet verschiebbaren Ventilschieber geformt sein. Der Ventilschieber wird mittels eines in der Stößelbohrung des Polkerns angeordneten Stößels über den Anker betätigt, z.B. gegen Federkraft. Das Einschraubgehäuse besitzt in die Schieberbohrung mündende Querdurchgänge, so dass das Einschraubgehäuse die Funktion einer Hydraulik-Ventilkomponente hat. Zur Anpassung an den Schieberhub oder bestimmte Schieberpositionen in Relation zu den Querdurchgängen oder Steuerkanten können der Polkern und/oder der Anker entsprechend bearbeitet werden, während das Magnetrohr unverändert bleiben kann.

Damit das in den meisten Fällen einen Kaufteil darstellende Magnetrohr kostengünstig ist, ist es zweckmäßig, wenn die Wandstärke des Magnetrohres bis in das Schraubende im Wesentlichen konstant ist. Das Magnetrohr ist somit an dem Schraubende ein einfaches gerades Rohr.

Bei einer zweckmäßigen Ausführungsform besteht das Einschraubgehäuse aus Stahl. Das Magnetrohr besteht zumindest in einem das Schraubende bildenden Endabschnitt aus Metall. Vorzugsweise besteht der Endabschnitt aus einem Stahl, der dem Stahl des Einschraubgehäuses gleich oder von diesem verschieden ist. Durch die lösbare Verbindung zwischen dem Magnetrohr und dem baulich davon getrennten Einschraubgehäuse können die jeweiligen Materialien den gegebenenfalls unterschiedlichen magnetischen und hydraulischen bzw. Festigkeits-Anforderungen besser angepasst sein.

Um das Einschraubventil auch bei einem Stromausfall betätigen zu können, oder in einem Notfall, ist es zweckmäßig, wenn im verschlossenen Ende des Magnetrohres eine Anker-Handbetätigung angeordnet ist.

Schließlich kann es zweckmäßig sein, zwischen dem Magnetrohr und dem Spulenkörper wenigstens eine Dichtung vorzusehen, die verhindert, dass gegebenenfalls durch die Gewindeverbindung zwischen dem Magnetrohr und dem Einschraubgehäuse durchleckendes Druckmittel nach außen austritt und sich innen keine äußeren Einflüsse einwirken.

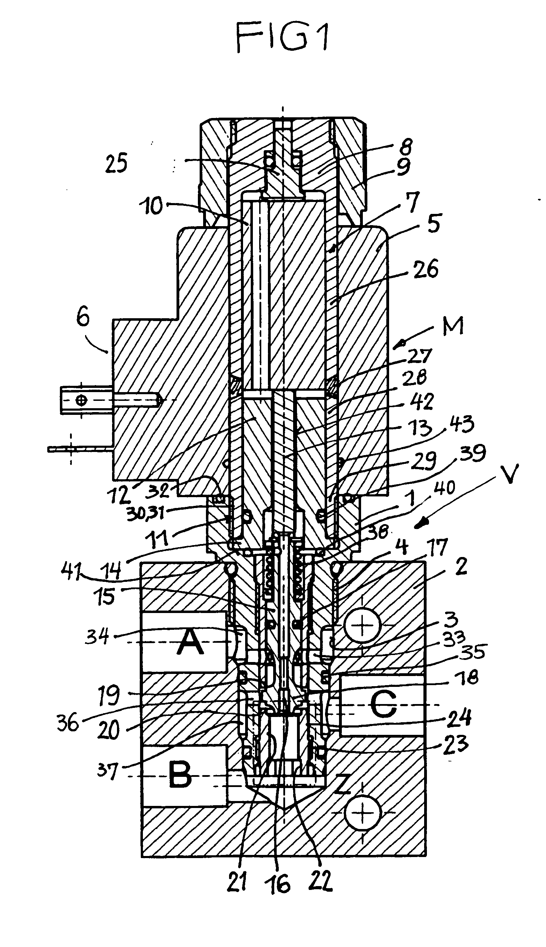

Anhand der Zeichnung wird eine Ausführungsform des Erfindungsgegenstandes erläutert. Fig. 1 zeigt einen Längsschnitt eines in einen Block eingeschraubten Einschraubventils, das beispielsweise ein 3/2-Wege-Magnetsitzventil überwiegend aus stählernen Komponenten ist.

Das in Fig. 1 gezeigte Einschraubventil V ist ein 3/2-Wege-Magnetsitzventil mit einem bestimmten Ventilhub und einer bestimmten Anforderung an das Verhältnis zwischen dem Magnetkraftverlauf eines Betätigungsmagneten M und dem Ventilhub. Die Magnetkomponenten des Betätigungsmagneten M könnten jedoch auch für ein anderes Sitzventil, beispielsweise ein 2/2-Wege-Sitzventil oder ein Mehrwege-Schieberventil mit anderem Ventilhub oder anderer Abstimmung zwischen dem Magnetkraftverlauf und dem Ventilhub nach entsprechenden Anpassungen verwendet werden.

Das Einschraubventil V ist zwischen drei zu einer Stufenbohrung 3 führenden Anschlüssen A, B, C in einem Block 2 montiert. Ein Einschraubgehäuse 1 ist in dem Block 2 in die Stufenbohrung 3 eingeschraubt und mit einem Einschraub-Außengewindeabschnitt 4 bis zum Anschlag an der Stufenbohrungsmündung angezogen (und abgedichtet).

Der Betätigungsmagnet M ist beispielsweise ein Schwarz/Weiß-Magnet, könnte jedoch bei Bedarf auch ein Proportionalmagnet sein. Der Betätigungsmagnet M weist als Magnetkomponenten ein außenliegendes Spulengehäuse 5 mit elektrischen Anschlüssen 6 auf, das auf ein Magnetrohr 7 geschoben und durch eine mit einem verschlossenen Ende 8 des Magnetrohres 7 verschraubte Überwurfmutter 9 auf Anschlag gegen das Einschraubgehäuse 1 gebracht ist (Dichtung 32). Im Magnetrohr 7 ist beim verschlossenen Ende 8 ein Anker 10 enthalten. Abgesehen vom verschlossenen Ende 8 ist das Magnetrohr 7 ein gerades Rohr aus einem oberen Abschnitt 26, einem Zwischenabschnitt 27 aus nicht-magnetischem Material, und einem unteren Abschnitt 28, der in einem Schraubende 29 mit einem Außengewindeabschnitt 30 gerade endet. Zumindest der untere Abschnitt 28 besteht aus Metall, gegebenenfalls aus Stahl, und zwar entweder dem gleichen Stahls wie der des Einschraubgehäuses 1 oder einem anderen Stahl, der gegebenenfalls bessere magnetische Eigenschaften hat. Das Magnetrohr 7 ist mit dem Schraubende 29 in einem Schraubsitz 11 des Einschraubgehäuses 1 festgelegt und spannt einen Polkern-Flansch 14 gegen einen Anschlag 41 im Einschraubgehäuse 1. Dieser Bereich ist durch eine Innendichtung 40 abgedichtet. Der Polkern-Flansch 14 gehört zu einem Polkern 12, dessen oberes Ende dem unteren Ende des Ankers 10 gegenüberliegt. Der Polkern enthält eine Stößelbohrung 42, in der ein Stößel 13 mit Spiel verschiebbar ist, über den der Anker 10 bei bestromtem Betätigungsmagneten M einen Ventilkegel 15 gegen eine Schließfeder 38 beaufschlagt. Der Ventilkegel 15 ist im Einschraubgehäuse 1 abgedichtet verschiebbar geführt (O-Ring 17) und enthält eine mittige Längsbohrung 16. Am unteren Ende weist der Ventilkegel 15 eine Verdickung 18 auf, an der obere und untere ringförmige Sitzflächen geformt sind, die abwechselnd mit einem Ventilsitz 19 im Einschraubgehäuse 1 und einem Ventilsitz 20 in einer Hülse 21 zusammenwirken, und deren Außendurchmesser größer sind als die Innendurchmesser der Ventilsitze 19, 20.

Die Hülse 21 sitzt im unteren Ende des Einschraubgehäuses 1 und weist eine Drehhandhabe, beispielsweise einen Innensechskant, auf. Die Hülse 21 ist im Einschraubgehäuse 1 durch eine Gewindeverbindung 23 axial positioniert und durch eine Presssitzzone 24 abgedichtet, wobei die Presssitzzone 24 durch einen Presssitz gleichzeitig eine Verdrehsicherung für die Gewindeverbindung 23 bildet.

In der Montierlage in Fig. 1 stehen z.B. das untere Ende des Einschraubgehäuses 1 und das freie Ende der Hülse 21 dem Grund der Stufenbohrung mit axialem Zwischenabstand anschlagfrei gegenüber. Vom Anschluss A verläuft über die Stufenbohrung 3 und eine Ringnut 34 sowie Querdurchgänge 33 im Einschraubgehäuse 1 eine Strömungsverbindung zum oberen Ventilsitz 19, während vom Anschluss C über die Stufenbohrung 3 und eine Ringnut 37 des Einschraubgehäuses 1 und weitere Querdurchgänge 36 eine Strömungsverbindung zum Zwischenraum zwischen den Ventilsitzen 19, 20 verläuft. Der Anschluss B steht schließlich über den Grund der Stufenbohrung 3 und die Innenbohrung der Hülse 21 mit dem Ventilsitz 20 in Strömungsverbindung.

In dem in Fig. 1 gezeigten, stromlosen Zustand des Betätigungsmagneten M wird der Ventilkegel 15 durch die Schließfeder 38 nach oben gezogen, so dass der obere Ventilsitz 19 leckagefrei abgesperrt wird, und der Anschluss A vom Anschluss C getrennt ist. Hingegen ist der Ventilsitz 20 geöffnet, so dass die Strömungsverbindung vom Anschluss B zum Anschluss C offen ist. Wird der Betätigungsmagnet M bestromt, dann wird der Anker 10 zum Polkern 12 gezogen und der Ventilkegel 15 über den Stößel 13 gegen die Kraft der Schließfeder 38 nach unten verstellt, bis die Verdickung auf dem unteren Ventilsitz 20 aufsetzt und den Anschluss B leckagefrei vom Anschluss C trennt, während nun der Anschluss A mit dem Anschluss C über den Ventilsitz 19 verbunden ist.

Um dieselben entweder vorhandenen oder in Großserien kostengünstig zu beschaffenden Magnetkomponenten an einen anderen Ventiltyp (ein anderes Sitzventil oder ein Schieberventil) mit anderem Ventilhub oder einer anderen Abstimmung zwischen dem Magnetkraftverlauf und dem Ventilhub anzupassen, lassen sich der Anker 10 und/oder der Polkern 12, z.B. in einem Dreh- oder Schleifautomaten, bearbeiten. Gegebenenfalls wird auch das Schraubende 29 des Magnetrohres 7 gekürzt, falls erforderlich.

Auch ein Schieberventil könnte als das Einschraubventil V beispielsweise mit dem nur bezüglich des Schraubsitzes 11 und des Anschlages 41 gleichen Einschraubgehäuse 1 oder mit einem anderen passenden Einschraubgehäuse 1 erstellt werden (nicht gezeigt). Im Einschraubgehäuse 1 kann dann eine axiale Schieberbohrung für einen abgedichtet verschiebbaren Ventilschieber sowie in die Schieberbohrung mündende Querdurchgänge geformt werden. Wird ein Einschraubgehäuse 1 mit anderer Länge oder anderem Durchmesser passend zu einer anderen Stufenbohrung oder anderen Hydraulik-Ventilkomponenten benötigt, so wird dieses mit zu den Magnetkomponenten passendem Schraubsitz 11 angefertigt und z.B. mit den Magnetkomponenten kombiniert, die in Fig. 1 gezeigt sind.

Falls erforderlich, kann auch der Spulenkörper 5 gegen einen anderen getauscht werden. Zur Anpassung an einen größeren Ventilhub wird beispielsweise der Polkern 12 am oberen Ende spanabhebend bearbeitet und somit verkürzt, und/oder der Anker 10. Zur Anpassung an einen kleineren Ventilhub kann die Oberseite des Polkern-Flansches 14 bearbeitet werden, so dass bei unveränderter Länge des Magnetrohres 7 der Polkern 12 relativ zum Anker 10 tiefer eingreift. Zum Festlegen des Polkern-Flansches 14 braucht bei der Montage dann nur das Magnetrohr mit dem Schraubende 29 bis auf Anschlag am dann dünneren Polkern-Flansch 14 eingeschraubt zu werden, um den Polkern 12 axial zu fixieren. Hierzu sollte der Außengewindeabschnitt 30 am Schraubende 29 des Magnetrohres 7 lang genug sein, z.B. länger als der Innengewindeabschnitt 31 im Schraubsitz 11.

Dank der baulichen Trennung zwischen dem Einschraubgehäuse 1 und dem Magnetrohr 7 lässt sich das Magnetrohr 7 auch nach einer Anpassung des Betätigungsmagneten an viele verschiedene Ventiltypen und Ventilkonzepte verwenden, so dass es in Großserie und damit kostengünstig beschaffbar oder herstellbar ist. Der Anker 10 und der Polkern 12 sind ohnedies Standardteile, die beim Hersteller des Einschraubventils V bequem entsprechend zur Anpassung bearbeitbar sind. Auch Spulenkörper 5 unterschiedlicher Leistungsspezifikationen können unter Beibehalt des Magnetrohres 7 zwecks Anpassung an andere Ventilkonzepte verwendet werden. Es ist somit eine universelle modulare Anpassung an viele verschiedene Ventiltypen mit denselben entweder vorhandenen oder in Großserie kostengünstig beschaffbaren oder herstellbaren Magnetkomponenten möglich. Zudem bietet die direkte axiale Positionierung des Polkern-Flansches 14 zwischen dem Schraubende 29 und dem Anschlag 41 im Einschraubgehäuse 1 den Vorteil, für diese axiale Positionierung keine aus dem Block 2 oder dem Grund der Stufenbohrung 3 abgeleitete Gegenkraft zu benötigen, so dass das Einschraubgehäuse oder die hydraulischen Komponenten nicht auf Anschlag in die Stufenbohrung 3 geschraubt und hierfür entsprechend präzise bearbeitet zu werden brauchen.

## Patentansprüche

1. Einschraubventil (V) mit einem ein Einschraub-Außengewinde (4) aufweisenden Einschraubgehäuse (1), an dem ein wenigstens einen Spulenkörper (5), ein einendig verschlossenes Magnetrohr (7) einen zum verschlossenen Ende (8) des Magnetrohres (7) weisenden Anker (10), und wenigstens einen eine Stößelbohrung (42) enthaltenden Polkern (12) umfassender Betätigungsmagnet (M) angebracht ist, und in dem Hydraulik-Ventilkomponenten untergebracht sind, wobei der Polkern (12) im Einschraubgehäuse (1) mittels eines Polkern-Flansches (14) axial festgelegt und das Magnetrohr (7) mit dem Einschraubgehäuse verbunden sind, **dadurch gekennzeichnet, dass** zum Ausbauen des Polkerns (12) und/oder des Ankers (10) das Magnetrohr (7) an einem in einen Schraubsitz (11) des Einschraubgehäuses (1) eingeschraubten, geraden Schraubende (29) lösbar mit dem Einschraubgehäuse (1) verbunden ist, und dass der Polkern-Flansch (14) zwischen dem Schraubende (29) des Magnetrohres (7) und einem Anschlag (41) im Schraubsitz (11) axial festgelegt ist.

2. Einschraubventil nach Anspruch 1, **dadurch gekennzeichnet, dass** das Magnetrohr (7) am verschlossenen Ende (8) ein Außengewinde für wenigstens eine Mutter (9) aufweist, die den austauschbar auf das Magnetrohr (7) aufgeschobenen Spulenkörper (5) auf das Einschraubgehäuse (1) spannt, vorzugsweise unter Zwischenlage einer Dichtung (32).

3. Einschraubventil nach Anspruch 1, **dadurch gekennzeichnet, dass** der Polkern (12) und das Magnetrohr (7) durch wenigstens eine Dichtung (39) gegeneinander abgedichtet sind.

4. Einschraubventil nach Anspruch 1, **dadurch gekennzeichnet, dass** am Schraubende (29) des Magnetrohres (7) ein Außengewindeabschnitt (30) und im Schraubsitz (11) des Einschraubgehäuses (1) ein Innengewindeabschnitt (31) vorgesehen sind, und dass, vorzugsweise, der Außengewindeabschnitt (30) länger ist als der Innengewindeabschnitt (31).

5. Einschraubventil nach Anspruch 1, **dadurch gekennzeichnet, dass** zwischen dem Polkern (12) und dem Einschraubgehäuse (1) eine Innendichtung (40) vorgesehen ist.

6. Einschraubventil nach wenigstens einem der vorhergehenden Ansprüche, **dadurch gekennzeichnet, dass** das Einschraubgehäuse (1) im Anschluss an das Einschraub-Außengewinde (4) eingeformte Querdurchgänge (33, 36) und einen zwischen diesen eingeformten Ventilsitz für einen mittels eines in der Stößelbohrung (42) des Polkerns (12) angeordneten Stößel (13) betätigbaren, im Einschraubgehäuse (1) abgedichtet verschiebbaren Ventilkegel (15) eines Sitzventils aufweist.

7. Einschraubventil nach wenigstens einem der Ansprüche 1 bis 5, **dadurch gekennzeichnet, dass** das Einschraubgehäuse (1) im Anschluss an das Einschraub-Außengewinde (4) innen eine axiale Schieberbohrung für einen mittels eines in der Stößelbohrung (42) des Polkerns (12) verschiebbar angeordneten Stößel (13) betätigbaren, in der Schieberbohrung abgedichtet verschiebbaren Ventilschieber sowie in der Schieberbohrung mündende Querdurchgänge aufweist.

8. Einschraubventil nach Anspruch 1, **dadurch gekennzeichnet, dass** die Wandstärke des Magnetrohres (7) bis in das Schraubende (29) zumindest im Wesentlichen konstant ist.

9. Einschraubventil nach wenigstens einem der vorhergehenden Ansprüche, **dadurch gekennzeichnet, dass** das Einschraubgehäuse (1) aus Stahl besteht, und dass das Magnetrohr (7) in einem das Schraubende (29) bildenden Endabschnitt (28) aus Metall besteht, vorzugsweise aus Stahl, der dem Stahl des Einschraubgehäuses (1) gleich oder von diesem verschieden ist.

10. Einschraubventil nach Anspruch 1, **dadurch gekennzeichnet, dass** im verschlossenen Ende (8) des Magnetrohres (7) eine Anker-Handnotbetätigung (25) angeordnet ist.

11. Einschraubventil nach Anspruch 1, **dadurch gekennzeichnet, dass** zwischen dem Magnetrohr (7) und dem Spulenkörper (5) wenigstens eine Dichtung (43) vorgesehen ist.

## Claims

1. Screw-in valve (V) having a screw-in housing (1) with a screw-in exterior thread (4) at which screw-in housing (1) at least one coil body (5), a solenoid tube (7) being closed at one end, an armature (10) facing the closed end (8) of the solenoid tube (7), and at least one actuating solenoid (M) having a pole core (12) containing a plunger bore (42) are arranged, and in which screw-in housing (1) hydraulic valve components are accommodated, wherein the pole core (12) is axially secured within the screw-in housing (1) by means of a pole core flange (14), and wherein the solenoid tube (7) is connected with the screw-in housing, **characterised in that** for disassembly of the pole core (12) and/or of the armature (10) the solenoid tube (7) is releasably connected with the screw-in housing (1) at a straight screw-in end (29) screwed into a screw socket (11) of the screw-in housing (1), and that the pole core flange (14) is axially secured between the screw-in end (29) of the solenoid tube (7) and a stop (41) within the screw socket (11).

2. Screw-in valve according to claim 1, **characterised in that** the solenoid tube (7) has an exterior thread for at least one nut (9) at the closed end (8), which nut (9) is spanning the coil body (5) onto the screw-in housing (1), which coil body (5) is replaceably threaded on the solenoid tube (7), preferably, via a sealing (32) placed in-between.

3. Screw-in valve according to claim 1, **characterised in that** the pole core (12) and the solenoid tube (7) are sealed in relation to each other by at least one sealing (39).

4. Screw-in valve according to claim 1, **characterised in that** an exterior thread section (30) is provided at the screw-in end (29) of the solenoid tube (7), that an interior thread section (31) is provided within the screw socket (11) of the screw-in housing (1), and that, preferably, the exterior thread section (30) is longer than the interior thread section (31).

5. Screw-in valve according to claim 1, **characterised in that** an interior sealing (40) is provided between the pole core (12) and the screw-in housing (1).

6. Screw-in valve according to at least one of the preceding claims, **characterised in that** the screw-in housing (1) has lateral passages (33, 36) formed in continuation of the screw-in exterior thread (4), and a valve seat formed in-between the lateral passages (33, 36) for a valve cone (15) of a seat valve, which valve cone (15) is slidable in sealed fashion within the screw-in housing (1) and is actuated by a plunger (13) arranged in the plunger bore (42) of the pole core (12).

7. Screw-in valve according to at least one of claims 1 to 5, **characterised in that** the screw-in housing (1) has an inner axial slider bore in continuation of the screw-in exterior thread (4) for a valve slider which is slidable in the slider bore in sealed fashion, as well as lateral passages opening into the slider bore, the valve slider being actuated by a plunger (13) slidably arranged in the plunger bore (42) of the pole core (12).

8. Screw-in valve according to claim 1, **characterised in that** the wall thickness of the solenoid tube (7) is at least substantially constant along the extension to the screw-in end (29).

9. Screw-in valve according to at least one of the preceding claims, **characterised in that** the screw-in housing (1) is made from steel, and that the solenoid tube (7) consists of metal in an end section (28) forming the screw-in end (29), preferably is made from steel which is either equal to the steel of the screw-in housing (1) or is different from the steel of the screw-in housing (1).

10. Screw-in valve according to claim 1, **characterised in that** a manual armature emergency actuation (25) is arranged in the closed end (8) of the solenoid tube (7).

11. Screw-in valve according to claim 1, **characterised in that** at least one sealing (43) is provided between the solenoid tube (7) and the coil body (5).

## Revendications

1. Soupape à visser (V) comprenant un corps fileté (1), pourvu d'un filetage extérieur de vissage (4) et sur lequel est monté un aimant d'actionnement (M), qui comporte au moins un corps de bobine (5), un tube magnétique (7) fermé à une extrémité, un induit (10) orienté vers l'extrémité fermée (8) du tube magnétique (7), et au moins un noyau polaire (12) avec un alésage de poussoir (42), et dans lequel sont logés des composants de soupape hydrauliques, le noyau polaire (12) étant fixé axialement dans le corps fileté (1) au moyen d'une bride (14) de noyau polaire et le tube magnétique (7) étant assemblé avec le corps fileté, **caractérisée en ce que**, pour le démontage du noyau polaire (12) et/ou de l'induit (10), le tube magnétique (7) est assemblé de façon amovible avec le corps fileté (1) sur une extrémité filetée (29) rectiligne, vissée dans un siège taraudé (11) du corps fileté (1), et que la bride de noyau polaire (14) est fixée dans la direction axiale entre l'extrémité filetée (29) du tube magnétique (7) et une butée (41) du siège taraudé (11).

2. Soupape à visser suivant la revendication 1, **caractérisée en ce que** le tube magnétique (7) présente sur l'extrémité fermée (8) un filetage extérieur pour au moins un écrou (9) qui serre le corps de bobine (5), poussé de façon interchangeable sur le tube magnétique (7), sur le corps fileté (1), de préférence avec interposition d'un joint d'étanchéité (32).

3. Soupape à visser suivant la revendication 1, **caractérisée en ce que** le noyau polaire (12) et le tube magnétique (7) sont rendus étanches mutuellement par au moins un joint d'étanchéité (39).

4. Soupape à visser suivant la revendication 1, **caractérisée en ce que** sont prévues une section de filetage extérieur (30) sur l'extrémité filetée (29) du tube magnétique (7) et une section de taraudage (31) dans le siège taraudé (11) du corps fileté (1), et que, de préférence, la section de filetage extérieur (30) est plus longue que la section de taraudage (31).

5. Soupape à visser suivant la revendication 1, **caractérisée en ce qu'**un joint d'étanchéité intérieur (40) est prévu entre le noyau polaire (12) et le corps fileté (1).

6. Soupape à visser suivant l'une au moins des revendications précédentes, **caractérisée en ce que** le corps fileté (1) présente des passages transversaux (33, 36) conformés à la suite du filetage extérieur de vissage (4) et un siège de soupape, conformé entre ces derniers, pour un cône de soupape (15) d'une soupape à siège, déplaçable de façon étanche dans le corps fileté (1) et actionnable au moyen d'un poussoir (13), disposé dans l'alésage de poussoir (42) du noyau polaire (12).

7. Soupape à visser suivant l'une au moins des revendications 1 à 5, **caractérisée en ce que** le corps fileté (1) présente intérieurement, à la suite du filetage extérieur de vissage (4), un alésage de coulisse axial pour une coulisse de soupape, déplaçable de façon étanche dans l'alésage de coulisse et actionnable au moyen d'un poussoir (13) monté mobile dans l'alésage de poussoir (42) du noyau polaire (12), ainsi que des passages transversaux débouchant dans l'alésage de coulisse.

8. Soupape à visser suivant la revendication 1, **caractérisée en ce que** l'épaisseur de paroi du tube magnétique (7) est constante, au moins essentiellement, jusque dans l'extrémité filetée (29).

9. Soupape à visser suivant l'une au moins des revendications précédentes, **caractérisée en ce que** le corps fileté (1) se compose d'acier, et que le tube magnétique (7) se compose de métal, de préférence d'acier, dans une section d'extrémité (28) formant l'extrémité filetée (29), lequel acier est le même que celui du corps fileté ou est différent de ce dernier.

10. Soupape à visser suivant la revendication 1, **caractérisée en ce qu'**un actionnement de secours manuel d'induit (25) est disposé dans l'extrémité fermée (8) du tube magnétique (7).

11. Soupape à visser suivant la revendication 1, **caractérisée en ce qu'**au moins un joint d'étanchéité (43) est prévu entre le tube magnétique (7) et le corps de bobine (5).
